# EUROPÄISCHE PATENTSCHRIFT

(11) **EP 2 075 520 B1**
(45) Veröffentlichungstag und Bekanntmachung des Hinweises auf die Patenterteilung: **28.08.2019**
(21) Anmeldenummer: 08021936.3
(22) Anmeldetag: 17.12.2008
(51) Int. Cl.: F25D 17/06, F25D 29/00

(54) **Kühl- und/oder Gefriergerät**
Refrigeration and/or freezer device
Appareil de réfrigération et/ou de refroidissement

(30) Priorität: 28.12.2007 DE 202007018135 U; 18.01.2008 DE 202008000757 U
(43) Veröffentlichungstag der Anmeldung: 01.07.2009
(73) Patentinhaber: Liebherr-Hausgeräte Ochsenhausen GmbH, 88416 Ochsenhausen (DE)
(72) Erfinder: Schropp, Christian, Dipl.-Ing. (FH), 87776 Attenhausen (DE); Oelmaier, Klaus, Dipl.-Ing., 88416 Ochsenhausen (DE)
(74) Vertreter: Herrmann, Uwe

(56) Entgegenhaltungen:
- EP-A2- 0 859 206
- WO-A1-2004/015342
- WO-A1-2004/109205
- CN-A- 1 439 855
- JP-A- S5 262 766
- JP-A- S5 445 863
- JP-A- H05 240 567
- JP-A- H10 160 316
- US-A- 4 856 286
- US-A- 5 692 385
- US-A1- 2007 277 538
- US-B1- 6 722 142
- US-B1- 6 725 680

## Beschreibung

Die vorliegende Erfindung betrifft ein No-Frost-Kühl- und/oder Gefriergerät mit einem Ventilator zur Erzeugung einer Luftströmung in dem zu kühlenden Kompartiment.

Aus dem Stand der Technik sind so genannte No-Frost Kühl- und/oder Gefriergeräte bekannt, bei denen eine Vereisung des zu kühlenden Kompartimentes im wesentlichen dadurch verhindert wird, dass dem Verdampfer des Gerätes ein Ventilator zugeordnet ist, der für eine Luftumwälzung in dem zu kühlenden Raum sowie über den Verdampfer sorgt.

JP H05 240567 A betrifft ein Verfahren für Abtauen einer Vitrine. Gemäß dieser Lehre erhöht sich die Drehzahl des Ventilators gleich zu Beginn einer Abtauphase, verringert sich die Drehzahl des Ventilators zum Schluss der Abtauphase und erhöht sich die Drehzahl des Ventilators nach der Abtauphase.

Der vorliegenden Erfindung liegt die Aufgabe zugrunde, ein Kühl- und/oder Gefriergerät der eingangs genannten Art dahingehend weiterzubilden, das dieses gegenüber vorbekannten Geräten mit größerer Flexibilität betreibbar ist.

Diese Aufgabe wird durch ein Kühl- und/oder Gefriergerät mit den Merkmalen des Anspruchs 1 gelöst.

Erfindungsgemäß handelt es sich bei dem Ventilator um einen drehzahlgeregelten Ventilator.

Die Erfassungsmittel können derart ausgeführt sein, dass sie zusätzlich weitere Betriebsparameter des Gerätes messen.

Bei dem weiteren Betriebsparameter kann es sich beispielsweise um die Kompressordrehzahl und/oder um die Lauf- und Standzeiten des Kompressorsund/oder um die relative Einschaltdauer des Kompressors handeln. Denkbar ist es beispielsweise, dass in Verbindung mit einem drehzahlgeregelten Kompressor die Drehzahl des Ventilators in Abhängigkeit von der Kompressordrehzahl geregelt wird. Auch ist es denkbar, dass die Ventilatordrehzahl in Abhängigkeit von Lauf- und Standzeiten bzw. von der relativen Einschaltdauer des Kompressors eingestellt bzw. geregelt wird.

Bei dem weiteren Betriebsparameter kann es sich des Weiteren um die Stellung des Temperaturreglers des Geräts handeln. Wird der Temperaturregler des Gerätes auf einen hohen Wert eingestellt, das heißt wird eine hohe Kälteleistung benötigt, kann vorgesehen sein, dass die Ventilatordrehzahl bis zum Erreichen der Temperatur oder auch länger vergleichsweise hoch eingestellt wird. Wird demgegenüber eine kleinere Reglerstellung gewählt, das heißt wird nur ein geringer Kältebedarf gefordert, kann vorgesehen sein, dass der Ventilator mit einer vergleichsweise geringen Drehzahl betrieben wird.

In weiterer Ausgestaltung der Erfindung handelt es sich bei dem weiteren Betriebsparameter um die Temperatur und/oder um die Temperaturänderung bzw. deren Geschwindigkeit und/oder die Luftfeuchtigkeit und/oder die Luftfeuchtigkeitsänderung des zu kühlenden Raumes des Gerätes. Wird warmes Gut in das zu kühlende Kompartiment eingelegt, kann es zu einem vergleichsweise raschen Temperaturanstieg kommen, der eine relativ hohe Ventilatordrehzahl nach sich zieht.

Erfindungsgemäß ist vorgesehen, dass die Drehzahl des Ventilators vom Betriebszustand des Gerätes abhängt. Befindet sich das Gerät beispielsweise in der Abtauphase, kann vorgesehen sein, dass die Ventilatordrehzahl für eine bestimmte Zeitdauer bzw. für die Zeitdauer der Abtauphase erhöht wird. Erfindungsgemäß ist es vorgesehen, dass die Ventilatordrehzahl vor und unmittelbar nach der Abtauphase für eine bestimmte Zeitdauer erhöht wird und anschließend der Ventilator wieder mit der Nenndrehzahl betrieben wird.

Bei dem weiteren Parameter, in Abhängigkeit dessen eine Einstellung der Ventilatordrehzahl erfolgt, kann es sich um die Anzahl der Türöffnungen bzw. um die Türöffnungsdauer handeln. Wird die Tür des Gerätes relativ häufig oder lang andauernd geöffnet, ist von einem vergleichsweise großen Wärmeeintrag in das zu kühlende Kompartiment auszugehen. In diesen Fällen kann vorgesehen sein, die Ventilatordrehzahl entsprechend hoch einzustellen.

Die Erfassungsmittel können zusätzlich auch derart ausgeführt sein, dass sie Parameter der Umgebungsatmosphäre erfassen. Denkbar sind beispielsweise die Erfassung der Umgebungstemperatur und/oder der relativen Luftfeuchtigkeit der Geräteumgebung. Denkbar ist es, den Ventilator bei geringer Umgebungstemperatur und/oder bei geringer Luftfeuchtigkeit der Umgebungsatmosphäre mit geringer Drehzahl zu betrieben und bei höherer Umgebungstemperatur oder Luftfeuchtigkeit der Umgebungsatmosphäre mit entsprechend höherer Drehzahl zu betreiben, um der im Falle höherer Umgebungstemperatur erhöhten Kälteanforderung gerecht werden zu können.

An dieser Stelle wird darauf hingewiesen, dass der Begriff "Tür" nicht einschränkend dahingehend auszulegen ist, dass nur Geräte mit einem um eine vertikale Achse verschwenkbaren Verschlusselement erfasst sind. Auch Schubladen oder Klappen sind unter diesem Begriff zu verstehen.

Weitere Einzelheiten und Vorteile der Erfindung werden anhand eines im Folgenden beschriebenen Ausführungsbeispiels näher erläutert:
Das Kühl- und/oder Gefriergerät weist einen Kompressor, einen No-Frost-Verdampfer sowie einen Ventilator auf, der derart angeordnet ist, dass er Luftströmung im zu kühlenden Kompartiment sowie über den Verdampfer erzeugt.

Des Weiteren weist das Gerät Erfassungsmittel auf, mittels derer zusätzlich zu dem Betriebszustand ein oder mehrere das Gerät oder auch die Geräteumgebung betreffende Parameter erfassbar sind. Des Weiteren ist eine Steuer- und/oder Regeleinheit vorgesehen, die auf der Grundlage der erfassten Parameter den Ventilator entsprechend ansteuert.

Wird beispielsweise der weitere Parameter "Umgebungstemperatur" erfasst, kann vorgesehen sein, dass bei niedriger Umgebungstemperatur der Ventilator mit einer geringen Drehzahl und bei hoher Umgebungstemperatur aufgrund der höheren erforderlichen Kälteleistung mit einer vergleichsweise hohen Drehzahl betrieben wird.

Wird der weitere Parameter "Kompressordrehzahl" gemessen, kann insbesondere in Verbindung mit einem drehzahlgeregelten Kompressor die Ventilatordrehzahl in Abhängigkeit von der Kompressordrehzahl geregelt werden.

Wird beispielsweise der weitere Parameter "Lauf- und Standzeiten des Kompressors" gemessen, kann in Abhängigkeit dieses Parameters eine entsprechende Ventilatordrehzahl verwendet werden. Entsprechendes gilt für den Parameter "relative Einschaltdauer des Kompressors".

Auch ist es möglich, die Anzahl und/oder die Dauer der Öffnungen der Tür oder Klappe zu messen und die Ventilatordrehzahl zusätzlich in Abhängigkeit der Anzahl und/oder der Dauer der Türöffnungen zu wählen. Kommt es zu vielen bzw. lang andauernden Türöffnungen, führt dies zu einem erhöhten Wärmeeintrag in den zu kühlenden Raum. In diesem Fall wird die Drehzahl des Ventilators entsprechend erhöht, um die gestiegene Kälteleistung erbringen zu können.

Ein weiterer Parameter kann die "Reglerstellung" sein. In Abhängigkeit der seitens des Benutzers eingestellten Reglerstellung kann die Ventilatordrehzahl eingestellt werden. Bei "warmer Reglerstellung", d. h. bei geringer Kälteleistung kann der Ventilator mit geringer Drehzahl und bei "kalter Reglerstellung", d. h. bei hoher Kälteleistung mit hoher Drehzahl betrieben werden.

Erfindungsgemäß ist es denkbar, den Betriebszustand dahingehend zu erfassen, ob sich das Gerät in einer Abtauphase befindet. In der Erfindung ist vorgesehen, vor und unmittelbar nach einer Abtauphase die Ventilatordrehzahl für eine bestimmte Zeitdauer zu erhöhen. Anschließend wird das Gerät wieder mit der Nenndrehzahl betrieben.

Ein weiterer Parameter ist der Temperaturanstieg im Gerät. In diesem Fall wird nicht der Temperaturwert als solcher, sondern die Geschwindigkeit erfasst, mit der sich der Temperaturwert ändert. Erfolgt beispielsweise nach einer oder mehreren Türöffnungen ein rascher Temperaturanstieg im Gerät, wird die Ventilatordrehzahl erhöht.

Auch ist es denkbar, die Drehzahl des Ventilators zusätzlich in Abhängigkeit der relativen Luftfeuchtigkeit zu variieren.

Durch die vorliegende Erfindung wird es möglich, die Drehzahl eines drehzahlgeregelten Ventilators und damit den durch diesen erzeugten Luftvolumenstrom an die jeweils benötigte Kälteleistung anzupassen. Es kann für jeden Betriebszustand des Gerätes hinsichtlich Geräuschentwicklung, Energieverbrauch und Kälteleistung eine optimale Ventilatordrehzahl bestimmt und sodann durch Steuerung oder Regelung eingestellt werden.

## Patentansprüche

1. No-Frost-Kühl- und/oder Gefriergerät mit einem Ventilator zur Erzeugung einer Luftströmung in einem zu kühlenden Kompartiment des Gerätes, wobei das Gerät Erfassungsmittel zur Erfassung wenigstens eines Parameters sowie eine Steuer- oder Regeleinheit aufweist, die derart ausgeführt ist, dass sie die Drehzahl des Ventilators in Abhängigkeit des wenigstens einen gemessenen Parameters verändert, **dadurch gekennzeichnet, dass** es sich bei dem wenigstens einen Betriebsparameter um einen Betriebszustand des Gerätes handelt wobei der Betriebszustand die Zustände "Abtauphase" und "Normalbetrieb" umfasst, wobei im Normalbetrieb das Gerät mit einer Nenndrehzahl betrieben ist und die Drehzahl des Ventilators vor und unmittelbar nach einer Abtauphase für eine bestimmte Zeitdauer erhöht ist.

2. Kühl- und/oder Gefriergerät nach Anspruch 1, **dadurch gekennzeichnet, dass** die Erfassungsmittel derart ausgeführt sind, dass sie weitere Betriebsparameter des Gerätes messen.

3. Kühl- und/oder Gefriergerät nach Anspruch 2, **dadurch gekennzeichnet, dass** es sich bei dem weiteren Betriebsparameter um die Kompressordrehzahl und/oder um die Lauf- und Standzeiten des Kompressors und/oder um die relative Einschaltdauer des Kompressors handelt.

4. Kühl- und/oder Gefriergerät nach Anspruch 2 oder 3, **dadurch gekennzeichnet, dass** es sich bei dem weiteren Betriebsparameter um die Stellung des Temperaturreglers des Geräts handelt.

5. Kühl- und/oder Gefriergerät nach einem der Ansprüche 2 bis 4, **dadurch gekennzeichnet, dass** es sich bei dem weiteren Betriebsparameter um die Temperatur und/oder um die Temperaturänderung und/oder die Luftfeuchtigkeit und/oder die Luftfeuchtigkeitsänderung des zu kühlenden Raumes des Gerätes handelt.

6. Kühl- und/oder Gefriergerät nach einem der Ansprüche 2 bis 5, **dadurch gekennzeichnet, dass** es sich bei dem weiteren Parameter um die Änderungsgeschwindigkeit der Temperatur und/oder der Luftfeuchtigkeit des zu kühlenden Raumes des Gerätes handelt.

7. Kühl- und/oder Gefriergerät nach einem der Ansprüche 2 bis 6, **dadurch gekennzeichnet, dass** es sich bei dem weiteren Betriebsparameter um die Anzahl und/oder um die Dauer der Öffnungen der Tür und/oder Klappe und/oder Schublade handelt.

8. Kühl- und/oder Gefriergerät nach einem der vorhergehenden Ansprüche, **dadurch gekennzeichnet, dass** Erfassungsmittel derart ausgeführt sind, dass sie zusätzlich die Umgebungstemperatur und/oder die Luftfeuchtigkeit der Geräteumge-bung erfassen.

## Claims

1. A no-frost refrigerator unit and/or freezer unit comprising a fan for the generation of an airflow in a compartment of the unit to be cooled, wherein the unit comprises detection means for the detection of at least one parameter as well as a control or regulation unit which is made such that it varies the speed of the fan in dependence on the at least one measured parameter, **characterized in that** the at least one operating parameter is an operating state of the unit, with the operating state including the states "defrosting phase" and "normal operation", with the unit being operated in normal operation at a nominal speed and the speed of the fan being increased for a certain period of time before and immediately after a defrosting phase.

2. A refrigerator unit and/or a freezer unit in accordance with claim 1, **characterized in that** the detection means are made such they measure further operating parameters of the unit.

3. A refrigerator unit and/or a freezer unit in accordance with claim 2, **characterized in that** the further operating parameter is the compressor speed and/or the running times and idle times of the compressor and/or the relative switch-on duration of the compressor.

4. A refrigerator unit and/or a freezer unit in accordance with either of claims 2 or 3, **characterized in that** the further operating parameter is the setting of the temperature regulator of the unit.

5. A refrigerator unit and/or a freezer unit in accordance with one of the claims 2 to 4, **characterized in that** the further operating parameter is the temperature and/or the temperature change and/or the humidity and/or the humidity change of the space of the unit to be cooled.

6. A refrigerator unit and/or a freezer unit in accordance with one of the claims 2 to 5, **characterized in that** the further parameter is the change speed of the temperature and/or of the humidity of the space of the unit to be cooled.

7. A refrigerator unit and/or a freezer unit in accordance with one of claims 2 to 6, **characterized in that** the further operating parameter is the number and/or the duration of times the door and/or flap and/or drawer is opened.

8. A refrigerator unit and/or a freezer unit in accordance with one of the preceding claims, **characterized in that** detection means are made such that they additionally detect the ambient temperature and/or the humidity of the unit environment.

## Revendications

1. Appareil de réfrigération et/ou de congélation « no frost » comprenant un ventilateur destiné à générer un flux d'air dans un compartiment à réfrigérer de l'appareil, l'appareil comportant des moyens de détection destinés à détecter au moins un paramètre ainsi qu'une unité de commande ou de régulation, qui est conçue de telle manière qu'elle modifie la vitesse de rotation du ventilateur en fonction de l'au moins un paramètre mesuré, **caractérisé en ce que** l'au moins un paramètre de fonctionnement est un état de fonctionnement de l'appareil, l'état de fonctionnement comprenant les états « phase de dégivrage » et « fonctionnement normal », l'appareil étant, en fonctionnement normal, exploité avec une vitesse de rotation nominale et la vitesse de rotation du ventilateur avant et juste après une phase de dégivrage étant augmentée pendant une durée déterminée.

2. Appareil de réfrigération et/ou de congélation selon la revendication 1, **caractérisé en ce que** les moyens de détection sont conçus de telle manière qu'ils mesurent d'autres paramètres de fonctionnement de l'appareil.

3. Appareil de réfrigération et/ou de congélation selon la revendication 2, **caractérisé en ce que** l'autre paramètre de fonctionnement est la vitesse de rotation du compresseur et/ou les temps de marche et d'arrêt du compresseur et/ou le facteur de marche du compresseur.

4. Appareil de réfrigération et/ou de congélation selon la revendication 2 ou 3, **caractérisé en ce que** l'autre paramètre de fonctionnement est la position du régulateur de température de l'appareil.

5. Appareil de réfrigération et/ou de congélation selon l'une des revendications 2 à 4, **caractérisé en ce que** l'autre paramètre de fonctionnement est la température et/ou la variation de température et/ou l'humidité de l'air et/ou la variation d'humidité de l'air de l'espace à réfrigérer de l'appareil.

6. Appareil de réfrigération et/ou de congélation selon l'une des revendications 2 à 5, **caractérisé en ce que** l'autre paramètre est la vitesse de changement de la température et/ou de l'humidité de l'air de l'espace à réfrigérer de l'appareil.

7. Appareil de réfrigération et/ou de congélation selon l'une des revendications 2 à 6, **caractérisé en ce que** l'autre paramètre de fonctionnement est le nombre et/ou la durée des ouvertures de la porte et/ou du couvercle rabattant et/ou du tiroir.

8. Appareil de réfrigération et/ou de congélation selon l'une des revendications précédentes, **caractérisé en ce que** les moyens de détection sont conçus de telle manière qu'ils détectent en outre la température ambiante et/ou l'humidité de l'air de l'environnement de l'appareil.
